# EUROPÄISCHE PATENTSCHRIFT

(11) **EP 1 666 753 B1**
(45) Veröffentlichungstag und Bekanntmachung des Hinweises auf die Patenterteilung: **22.10.2008**
(21) Anmeldenummer: 05025937.3
(22) Anmeldetag: 29.11.2005
(51) Int. Cl.: F16D 23/12

(54) **Hydraulikzylinder, insbesondere Nehmerzylinder für eine hydraulische Kupplungsbetätigung für Kraftfahrzeuge**
Hydraulic cylinder, especially throw-out cylinder for hydraulic clutch actuation in vehicles
Cylindre hydraulique, en particulier cylindre émetteur pour actionnement hydraulique d'embrayage de véhicules

(30) Priorität: 03.12.2004 DE 102004058610
(43) Veröffentlichungstag der Anmeldung: 07.06.2006
(73) Patentinhaber: FTE automotive GmbH, 96106 Ebern (DE)
(72) Erfinder: Macht, Egid, 81247 München (DE); Derra, Hubert, 96166 Neubrunn (DE); Ryba, Jürgen, 96182 Reckendorf (DE); Grimmer, Dieter, 97483 Eltmann (DE)
(74) Vertreter: Oppermann, Mark

(56) Entgegenhaltungen:
- EP-A1- 1 083 357
- EP-A2- 1 150 032
- DE-A1- 4 322 969
- DE-A1- 19 847 529
- GB-A- 1 223 333

## Beschreibung

### TECHNISCHES GEBIET

Die Erfindung bezieht sich auf einen Hydraulikzylinder gemäß dem Oberbegriff des Patentanspruchs 1. Insbesondere bezieht sich die Erfindung auf einen Nehmerzylinder für eine hydraulische Kupplungsbetätigung für Kraftfahrzeuge, wie sie massenweise in der Automobilindustrie zum Einsatz kommen.

### STAND DER TECHNIK

Eine herkömmliche hydraulische Kupplungsbetätigung für Kraftfahrzeuge z.B. GB 1 223 333 hat einen Geberzylinder, der an einen mit Hydraulikflüssigkeit gefüllten Ausgleichsbehälter angeschlossen ist. Der Geberzylinder weist ein Zylindergehäuse auf, in dessen Gehäusebohrung ein Kolben längsverschieblich aufgenommen ist. Der Geberzylinderkolben begrenzt in der Gehäusebohrung des Zylindergehäuses eine Druckkammer und kann mittels eines Kupplungspedals oder eines elektromotorischen Antriebs mechanisch mit einer Betätigungskraft beaufschlagt werden. Die Druckkammer des Geberzylinders ist über eine Druckleitung mit einer Druckkammer eines Nehmerzylinders hydraulisch verbunden, so daß der durch Niedertreten des Kupplungspedals oder elektromotorische Verschiebung des Geberzylinderkolbens in der Druckkammer des Geberzylinders erzeugte Druck über die Flüssigkeitssäule in der Druckleitung auf die Druckkammer des Nehmerzylinders übertragbar ist. Der Nehmerzylinder weist ebenfalls ein Zylindergehäuse mit einer Gehäusebohrung auf, in der ein die Druckkammer des Nehmerzylinders begrenzender und somit mit dem im Geberzylinder erzeugten Druck beaufschlagbarer Kolben längsverschieblich aufgenommen ist. Dem Nehmerzylinderkolben ist eine Kolbenstange zugeordnet, die an einem Kupplungshebel angreift, welcher seinerseits mit dem Ausrücklager der Kupplung in Wirkverbindung steht. Im Ergebnis kann das Ausrücklager der Kupplung über den Nehmerzylinderkolben mit einer Betätigungskraft beaufschlagt werden, um über einen Ausrückmechanismus die Kupplungsdruckplatte von der Kupplungsmitnehmerscheibe und somit den Motor vom Getriebe des Kraftfahrzeugs zu trennen.

Ein gattungsgemäßer Nehmerzylinder für eine hydraulische Kupplungsbetätigung für Kraftfahrzeuge ist aus der DE 43 22 969 A1 bekannt. Dieser Nehmerzylinder weist einen Druckraum auf, der auf der einen Seite von einem Kolben begrenzt ist, welcher in einem Zylindergehäuse längsverschieblich aufgenommen ist. Auf der anderen Seite ist der Druckraum von einem Gehäuseboden des Zylindergehäuses begrenzt, und nach radial außen von einer Umfangswand des Zylindergehäuses, die durch ein in einem Gehäusegrundkörper eingesetztes Rohrteil ausgebildet ist. Um den Kolben im Zylindergehäuse zu verschieben, kann der Druckraum wahlweise über einen am Gehäuseboden vorgesehenen Druckanschluß mit einem Druckmittel beaufschlagt werden.

Bei diesem Stand der Technik ist am Gehäuseboden ferner noch ein weiterer Anschluß für einen Entlüfter vorgesehen, der dazu dient, den Nehmerzylinder nach seiner Montage und Befüllung mit dem Druckmittel zu entlüften, d.h. etwaige Lufteinschlüsse bzw. -blasen im Druckmittel nach außen abzuführen. Der Entlüfteranschluß mündet hier nahe der Mittelachse des Zylindergehäuses im Druckraum, was dazu führt, daß Luft, die sich in der Einbaulage des Nehmerzylinders oben an der Umfangswand des Zylindergehäuses ansammelt bzw. angesammelt hat, nur schwer nach außen abzuführen ist, zumal auch eine im Druckraum angeordnete Schraubendruckfeder für die Kolbenrückstellung die Entlüftung behindert. Darüber hinaus erfordert der Entlüfteranschluß bei der Herstellung des Nehmerzylinders einen nicht unerheblichen Mehraufwand, der in der Massenfertigung solcher Zylinder grundsätzlich unerwünscht ist.

### DARSTELLUNG DER ERFINDUNG

Der Erfindung liegt die Aufgabe zugrunde, einen möglichst einfach ausgebildeten und kompakt bauenden Hydraulikzylinder, insbesondere Nehmerzylinder für eine hydraulische Kupplungsbetätigung für Kraftfahrzeuge zu schaffen, der auf verglichen zum gattungsbildenden Stand der Technik einfachere Weise entlüftet werden kann.

Diese Aufgabe wird durch die im Patentanspruch 1 angegebenen Merkmale gelöst. Gemäß der Erfindung ist bei einem Hydraulikzylinder, insbesondere Nehmerzylinder für eine hydraulische Kupplungsbetätigung für Kraftfahrzeuge, welcher einen Druckraum hat, der auf der einen Seite von einem in einem Zylindergehäuse längsverschieblich aufgenommenen Kolben, auf der anderen Seite von einem Gehäuseboden des Zylindergehäuses und nach radial außen von einer Umfangswand des Zylindergehäuses begrenzt ist, wobei der Druckraum wahlweise über einen im Gehäuseboden vorgesehenen Druckanschluß mit einem Druckmittel beaufschlagbar ist, um den Kolben im Zylindergehäuse zu verschieben, im Druckraum am Gehäuseboden ein Einsatzteil vorgesehen, das in dem Druckanschluß eingesetzt ist und einen mit dem Druckanschluß kommunizierenden Kanalabschnitt aufweist, der sich in der Einbaulage des Hydraulikzylinders im wesentlichen in vertikaler Richtung erstreckt und in der Nähe der Umfangswand des Zylindergehäuses im Druckraum mündet.

Das einfach in den jedenfalls vorhandenen Druckanschluß eingesetzte Einsatzteil sorgt mit seinem in einem oberen Bereich des Druckraums mündenden Kanalabschnitt für einen besonderen Spüleffekt im Druckraum, insbesondere bei der hydraulischen Entlastung des Hydraulikzylinders, also während des Kolbenrücklaufs, welcher Spüleffekt eine kontinuierliche, selbsttätige Entlüftung des Hydraulikzylinders im Betrieb gewährleistet. Besondere Entlüfteranschlüsse od.dgl. sind entbehrlich, was alleine schon zu Bauraumvorteilen führt. Weitere Wirkungen und Vorteile der Erfindung ergeben sich aus der detaillierten Beschreibung eines bevorzugten Ausführungsbeispiels.

Vorteilhafte bzw. zweckmäßige Ausgestaltungen und Weiterbildungen der Erfindung sind ferner Gegenstand der Patentansprüche 2 bis 16 und werden nachfolgend ebenfalls beschrieben.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert, in denen elastomere Teile zur Vereinfachung der Darstellung im unverformten Zustand gezeigt sind. In den Zeichnungen zeigen:

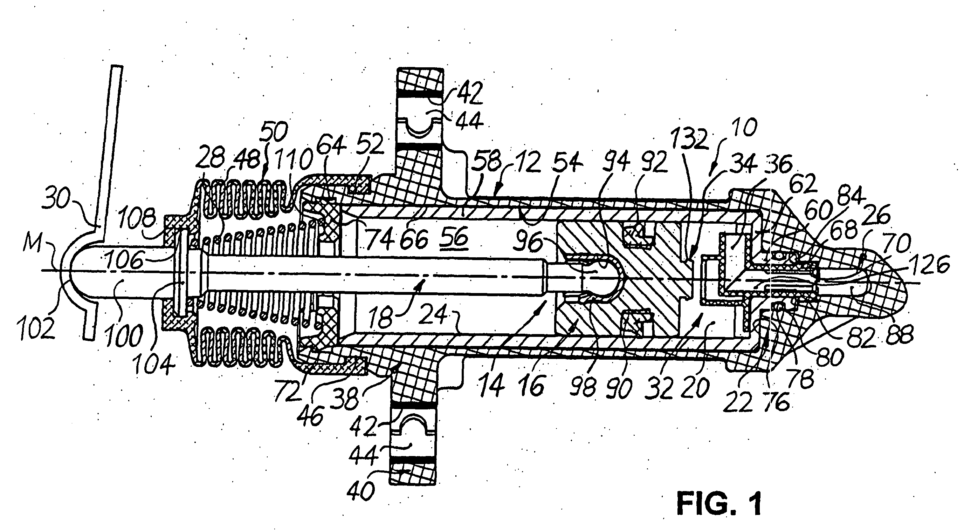

- Fig. 1: eine Längsschnittansicht eines erfindungsgemäß ausgebildeten Nehmerzylinders für eine hydraulische Kupplungsbetätigung für Kraftfahrzeuge, mit einer in einem mit einer Laufhülse ausgekleideten Zylindergehäuse aufgenommenen Kolbenbaugruppe, wobei der Nehmerzylinder in seiner unbetätigten Grund- oder Ruhestellung nach Erstbetätigung des Nehmerzylinders gezeigt ist, in der eine Kolbenstange der Kolbenbaugruppe mit ihrem aus dem Zylindergehäuse herausragenden Ende betätigungswirksam an einem Kupplungshebel angreift, während ein Kolben der Kolbenbaugruppe von einem am Boden des Zylindergehäuses vorgesehenen Einsatzteil beabstandet ist,
- Fig. 2: eine Längsschnittansicht eines Grundkörpers des Zylindergehäuses des Nehmerzylinders gemäß Fig. 1 ohne Anbauteile, insbesondere ohne die das Zylindergehäuse auskleidende Laufhülse,
- Fig. 3: eine Vorderansicht des Grundkörpers des Zylindergehäuses gemäß Fig. 2 von links in Fig. 2,
- Fig. 4: eine perspektivische Darstellung des bei dem Nehmerzylinder gemäß Fig. 1 am Boden des Zylindergehäuses vorgesehenen Einsatzteils von schräg vorne,
- Fig. 5: eine Seitenansicht des Einsatzteils gemäß Fig. 4,
- Fig. 6: eine Vorderansicht des Einsatzteils gemäß Fig. 4 von links in Fig. 5,
- Fig. 7: eine Rückansicht des Einsatzteils gemäß Fig. 4 von rechts in Fig. 5,
- Fig. 8: eine Längsschnittansicht des Einsatzteils gemäß Fig. 4 und
- Fig. 9: eine vergrößerte Darstellung des Details IX in Fig. 8.

### DETAILLIERTE BESCHREIBUNG EINES AUSFÜHRUNGSBEISPIELS

Die Fig. 1 zeigt einen Nehmerzylinder 10 für eine hydraulische Kupplungsbetätigung für Kraftfahrzeuge exemplarisch für einen erfindungsgemäß ausgebildeten Hydraulikzylinder. Der Nehmerzylinder 10 hat ein allgemein mit 12 beziffertes Zylindergehäuse, in dem eine Kolbenbaugruppe 14 längsverschieblich aufgenommen ist, die einen Kolben 16 und eine zumindest zug- und druckfest mit dem Kolben 16 verbundene Kolbenstange 18 umfaßt. Im Zylindergehäuse 12 befindet sich ein Druckraum 20, der auf der in Fig. 1 linken Seite variabel von dem Kolben 16, auf der in Fig. 1 rechten Seite fest von einem Gehäuseboden 22 des Zylindergehäuses 12 und nach radial außen fest von einer Umfangswand 24 des Zylindergehäuses 12 begrenzt ist. Der Druckraum 20 ist wahlweise über einen am Gehäuseboden 22 vorgesehenen Druckanschluß 26, der im montierten Zustand des Nehmerzylinders 10 in an sich bekannter Weise über eine hier nicht gezeigte Druckleitung an einen ebenfalls nicht dargestellten Kupplungsgeberzylinder angeschlossen ist, mit einem Druckmittel, etwa Bremsflüssigkeit beaufschlagbar, um den Kolben 16 im Zylindergehäuse 12 zu verschieben. Ferner ist auf der vom Druckraum 20 abgewandten Seite des Kolbens 16 ein Federelement in der Form einer Schraubendruckfeder 28 vorgesehen, die an ihrem in Fig. 1 rechten Ende am Zylindergehäuse 12 abgestützt ist und mit ihrem in Fig. 1 linken Ende an der Kolbenstange 18 angreift, so daß die Schraubendruckfeder 28 die Kolbenbaugruppe 14 in einer vom Gehäuseboden 22 weggewandten Richtung vorspannt, um die Kolbenstange 18 im montierten Zustand des Nehmerzylinders 10 in Anlage an einem in Fig. 1 schematisch eingezeichneten Kupplungshebel 30 zu halten. Wie nachfolgend noch näher beschrieben werden wird, ist im Druckraum 20 am Gehäuseboden 22 ein Einsatzteil 32 vorgesehen, genauer in dem Druckanschluß 26 im Gehäuseboden 22 eingesetzt, welches im dargestellten Ausführungsbeispiel vorteilhaft mehrere Funktionen erfüllt. Zum einen dient das Einsatzteil 32 als ein Fixierelement, welches die Kolbenbaugruppe 14 vor einer ersten Betätigung des Nehmerzylinders 10 in einer vorbestimmten Hubstellung bezüglich des Zylindergehäuses 12 fixiert und dazu ausgebildet ist, mit der ersten Betätigung des Nehmerzylinders 10 die Kolbenbaugruppe 14 gegenüber dem Zylindergehäuse 12 freizugeben, wobei das Einsatzteil 32 zur lösbaren Fixierung der Kolbenbaugruppe 14 bezüglich des Zylindergehäuses 12 mit einem Gegenelement am Kolben 16, hier in der Form eines Fortsatzes 34, zusammenwirkt. Zum anderen dient das Einsatzteil 32 als eine Art Entlüfter für den Druckraum 20, wozu es einen mit dem Druckanschluß 26 kommunizierenden Kanalabschnitt 36 aufweist, der sich in der in Fig. 1 gezeigten Einbaulage des Nehmerzylinders 10 im wesentlichen in vertikaler Richtung erstreckt und in der Nähe der Umfangswand 24 des Zylindergehäuses 12 im Druckraum 20 mündet.

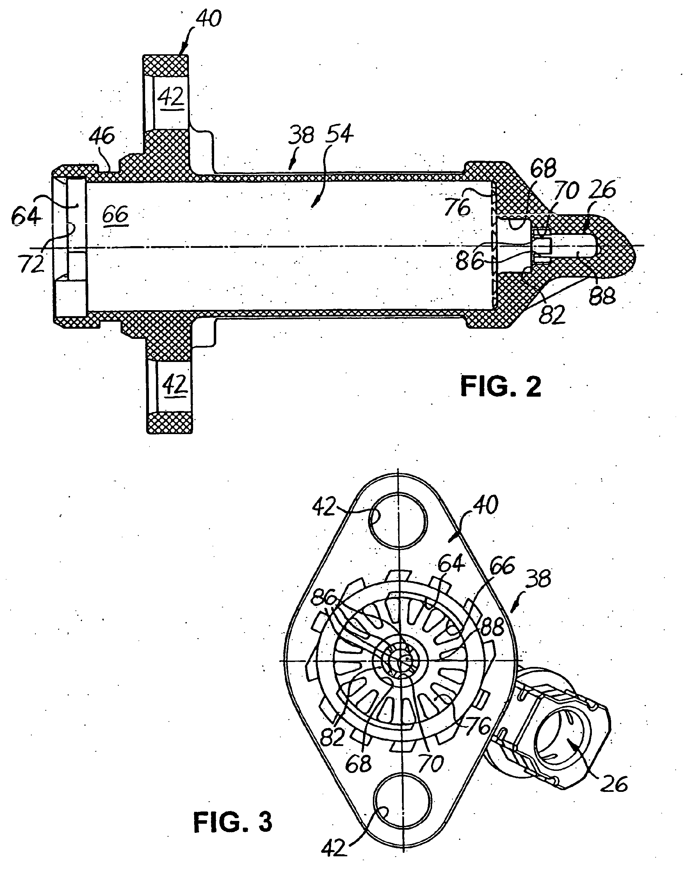

Gemäß Fig. 1 weist das Zylindergehäuse 12 einen vorzugsweise aus Kunststoff spritzgegossenen Grundkörper 38 auf, der in Fig. 2 separat dargestellt ist. Außenumfangsseitig ist der Grundkörper 38 mit einem Befestigungsflansch 40 für die Montage des Nehmerzylinders 10 im Kraftfahrzeug versehen, der zwei Befestigungsbohrungen 42 aufweist, die gemäß Fig. 1 mittels geschlitzter Stahlbuchsen 44 verstärkt sind. Durch die mit den Stahlbuchsen 44 ausgekleideten Befestigungsbohrungen 42 erstrecken sich im montierten Zustand des Nehmerzylinders 10 z.B. Schrauben (nicht gezeigt) hindurch, die der Befestigung des Nehmerzylinders 10 an etwa einer Getriebewand (nicht dargestellt) im Kraftfahrzeug dienen. In den Fig. 1 und 2 links von dem Befestigungsflansch 40 hat der Grundkörper 38 des Zylindergehäuses 12 des weiteren außenumfangsseitig eine Radialnut 46, in die gemäß Fig. 1 eine einen die Kolbenstange 18 umgebenden Faltenbalgabschnitt 48 aufweisende elastomere Schutzkappe 50 mit einem innenumfangsseitigen Ringbund 52 eingeknüpft ist.

Innenumfangsseitig weist der Grundkörper 38 des Zylindergehäuses 12 eine in Fig. 2 nach links offene, gestufte Bohrung 54 auf, in die gemäß Fig. 1 eine vorzugsweise metallische Laufhülse 56 als weiterer Bestandteil des Zylindergehäuses 12 eingesetzt ist. Die Laufhülse 56 hat zwei hohlzylindrische Hülsenabschnitte 58, 60 unterschiedlichen Durchmessers, die am Boden 22 des Zylindergehäuses 12 über einen Ringabschnitt 62 miteinander verbunden sind. Ausgehend von der in Fig. 2 linken Seite weist die Bohrung 54 des Grundkörpers 38 nun vier Abschnitte 64, 66, 68 und 70 verschiedenen Durchmessers auf, der sich in den Fig. 1 und 2 von links nach rechts verkleinert.

Der erste Bohrungsabschnitt 64 hat an seinem offenen Ende einen Hinterschnitt 72, der der Festlegung eines ringförmigen, für die Montage geschlitzten Sicherungselements 74 aus vorzugsweise Kunststoff am Zylindergehäuse 12 dient, welches an der in Fig. 1 linken Stirnfläche der Laufhülse 56 anliegt und somit die Laufhülse 56 im Grundkörper 38 des Zylindergehäuses 12 sichert. Im zweiten Bohrungsabschnitt 66 der gestuften Bohrung 54 des Grundkörpers 38 ist der durchmessergrößere Hülsenabschnitt 58 der Laufhülse 56 eng aufgenommen, der mit seiner Innenumfangsfläche die den Druckraum 20 begrenzende Umfangswand 24 ausbildet. An den zweiten Bohrungsabschnitt 66 schließt sich der dritte Bohrungsabschnitt 68 über eine Ringschulter 76 an, an der der Ringabschnitt 62 der Laufhülse 56 anliegt. Im dritten Bohrungsabschnitt 68 der gestuften Bohrung 54 im Grundkörper 38 ist der durchmesserkleinere Hülsenabschnitt 60 der Laufhülse 56 eng aufgenommen. Dabei ist der Hülsenabschnitt 60 außenumfangsseitig mit einer Radialnut 78 zur Aufnahme eines O-Rings 80 versehen, welcher für eine statische Abdichtung zwischen dem dritten Bohrungsabschnitt 68 und dem Hülsenabschnitt 60 sorgt. An den dritten Bohrungsabschnitt 68 schließt sich über eine weitere Ringschulter 82 der vierte Bohrungsabschnitt 70 an, wobei die Abmessungen des durchmesserkleineren Hülsenabschnitts 60 der Laufhülse 56 einerseits und der dritten und vierten Bohrungsabschnitte 68, 70 der gestuften Bohrung 54 andererseits so aufeinander abgestimmt sind, daß eine ringförmige Stirnfläche 84 des Hülsenabschnitts 60 einen geringen axialen Abstand zur Ringschulter 82 aufweist und über diese zur nachfolgend noch näher beschriebenen Befestigung des Einsatzteils 32 im Druckanschluß 26 nach radial innen vorsteht. Wie des weiteren den Fig. 2 und 3 zu entnehmen ist, ist der vierte Bohrungsabschnitt 70 der gestuften Bohrung 54 im Grundkörper 38 innenumfangsseitig mit einer Mehrzahl von, im dargestellten Ausführungsbeispiel vier sich in axialer Richtung des Zylindergehäuses 12 erstreckenden Längsrippen 86 versehen, die nach radial innen vorstehen, ungleichmäßig bzw. asymmetrisch über dem Umfang des vierten Bohrungsabschnitts 70 verteilt sind und einer Drehwinkelorientierung des Einsatzteils 32 im Druckanschluß 26 dienen, wie nachfolgend ebenfalls noch näher erläutert werden wird. An dem in den Fig. 1 und 2 rechten Ende des vierten Bohrungsabschnitts 70 mündet schließlich eine im Grundkörper 38 ausgebildete, durchmesserkleinere Druckanschlußbohrung 88 im vierten Bohrungsabschnitt 70.

Wenngleich im dargestellten Ausführungsbeispiel der vierte Bohrungsabschnitt 70 der gestuften Bohrung 54 einen kleineren Durchmesser aufweist als der dritte Bohrungsabschnitt 68, so daß der Grundkörper 38 des Zylindergehäuses 12 in diesem Bereich im wesentlichen der Außenkontur des Grundkörpers 38 folgend keine übermäßig großen Unterschiede in der Wandungsdicke aufweist, könnte der vierte Bohrungsabschnitt 70 bei geänderter Außenkontur des Grundkörpers 38 grundsätzlich auch mit einem Durchmesser ausgebildet werden, der dem Durchmesser des dritten Bohrungsabschnitts 68 entspricht.

Aus der obigen Beschreibung ist ersichtlich, daß die Druckanschlußbohrung 88, der vierte Bohrungsabschnitt 70 der gestuften Bohrung 54 sowie der in deren drittem Bohrungsabschnitt 68 aufgenommene Hülsenabschnitt 60 der Laufhülse 56 Bestandteil des Druckanschlusses 26 sind, über den der Druckraum 20 mit dem Druckmittel beaufschlagt werden kann. Infolge der durch den O-Ring 80 bewirkten statischen Abdichtung am Außenumfang des durchmesserkleineren Hülsenabschnitts 60 der Laufhülse 56 erfährt diese bei einer Druckbeaufschlagung des Druckraums 20 über den Druckanschluß 26, bei welcher der hydraulische Druck zum einen auf die ringförmige Stirnfläche 84 des Hülsenabschnitts 60 und zum anderen auf die dieser gegenüber flächengrößeren, dem Druckraum 20 zugewandten Stirnfläche des Ringabschnitts 62 der Laufhülse 56 wirkt, eine resultierende Kraft nach rechts in Fig. 1, die bestrebt ist, die Laufhülse 56 in der gestuften Bohrung 54 des Grundkörpers 38 zu halten, die Befestigung der Laufhülse 56 im Grundkörper 38 mittels des Sicherungselements 74 also entlastet.

Wie der Fig. 1 des weiteren zu entnehmen ist, weist der mit geringem Radialspiel im durchmessergrößeren Hülsenabschnitt 58 der Laufhülse 56 des Zylindergehäuses 12 geführte, im dargestellten Ausführungsbeispiel metallische Kolben 16 am Außenumfang eine Radialnut 90 zur Aufnahme eines Nutrings 92 auf. Der elastomere Nutring 92 liegt in an sich bekannter Weise mit seiner außenumfangsseitigen Dichtlippe unter einer gewissen Vorspannung an der Umfangswand 24 des Zylindergehäuses 12 an und sorgt somit für eine dynamische Abdichtung des Druckraums 20 nach links in Fig. 1.

Auf der in Fig. 1 linken Seite ist der Kolben 16 ferner mit einer mittigen Aussparung 94 versehen, in der ein am in Fig. 1 rechten Ende der Kolbenstange 18 ausgebildeter Kugelkopf 96 mittels eines Sicherungselements 98 gelenkig gehalten ist, so daß die Kolbenstange 18 bezüglich des Kolbens 16 eine gewisse Winkelbeweglichkeit hat. Anstelle der in Fig. 1 gezeigten Ausgestaltung der Kolbenbaugruppe 14 könnte diese auch einteilig ausgebildet sein, mit einer zur Kolbenstange hin konisch oder ballig abfallenden Kolbenaußenfläche zur Gewährleistung der Winkelbeweglichkeit, wie es prinzipiell aus der DE 43 22 969 A1 oder der DE 43 31 241 A1 bekannt ist.

Die im dargestellten Ausführungsbeispiel metallische Kolbenstange 18 hat auf der in Fig. 1 linken Seite ein verdicktes Ende 100 mit einer im wesentlichen sphärischen Endfläche 102, über die die Kolbenstange 18 betätigungswirksam am Kupplungshebel 30 angreift. Eingangs des verdickten Endes 100 weist die Kolbenstange 18 ferner einen Ringbund 104 auf, der zum einen der Anbindung der Schutzkappe 50 an der Kolbenstange 18 dient, wobei der Ringbund 104 der Kolbenstange 18 formschlüssig in einer im wesentlichen komplementär geformten Ringaussparung 106 in einem Befestigungsabschnitt 108 der Schutzkappe 50 eingreift, der sich auf der vom Druckraum 20 abgewandten Seite der Schutzkappe 50 an den Faltenbalgabschnitt 48 der Schutzkappe 50 anschließt. Zum anderen bildet der Ringbund 104 der Kolbenstange 18 mit seiner dem Druckraum 20 zugewandten Stirnseite ein Widerlager für die Schraubendruckfeder 28 aus, wobei von dem dem Ringbund 104 zugewandten Ende der Schraubendruckfeder 28 auch eine gewisse radiale Zentrierwirkung für die Kolbenstange 18 ausgeht, die bei der Montage des Nehmerzylinders 10 im Kraftfahrzeug von Vorteil ist.

Der Fig. 1 ist ferner zu entnehmen, daß das Sicherungselement 74 zum Halten der Laufhülse 56 im Zylindergehäuse 12 auf seiner vom Druckraum 20 abgewandten Seite mit einer Axialnut 110 versehen ist, die als weiteres Widerlager und zur Zentrierung des dem Druckraum 20 zugewandten, in Fig. 1 rechten Endes der Schraubendruckfeder 28 dient, welche sich im Durchmesser ausgehend vom Ringbund 104 zur Axialnut 110 hin im wesentlichen konisch erweitert, also kegelstumpfförmig ausgebildet ist. Durch diese Herausverlagerung der Schraubendruckfeder 28 aus dem Druckraum 20 und der Laufhülse 56 hin zu der gezeigten Stellung zwischen Sicherungselement 74 und Ringbund 104 an der Kolbenstange 18 kann, verglichen zum eingangs geschilderten Stand der Technik, vorteilhaft das Verhältnis von Hub- zu Totraumvolumen (oder Istvolumen in der dargestellten Grundstellung des Kolbens 16) des Druckraums 20 verringert werden, was letztendlich eine Verkürzung der axialen Baulänge des Zylindergehäuses 12 ermöglicht. Darüber hinaus wird, wiederum verglichen mit dem eingangs diskutierten Stand der Technik, der Druckraum 20 bei einem Rücklauf des Kolbens 16 aus einer Betätigungsstellung in seine Grundstellung vom Druckmittel besser durchspült bzw. entleert, was zu einer besseren Entlüftung des Nehmerzylinders 10 beiträgt. Hierbei entfällt auch die vorbekannte Kolbenrückstellfeder im Druckraum als Kristallisationsort für Luftblasen.

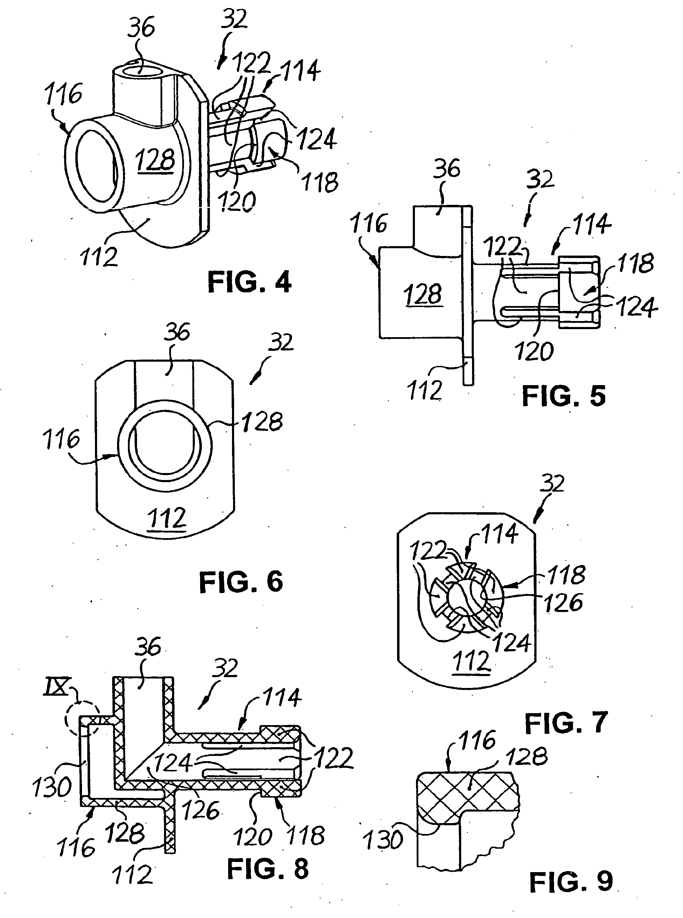

Den Figuren 4 bis 9 sind nun weitere Details des vorzugsweise aus einem Kunststoff, wie Polyamid 66 mit einer Glasfaserverstärkung spritzgegossenen Einsatzteils 32 zu entnehmen, das gemäß insbesondere Fig. 8 in allen seinen Bereichen mit einer im wesentlichen konstanten Wandstärke ausgebildet ist, um Formverzüge und damit eine unzureichende Maßhaltigkeit infolge von Materialanhäufungen zu vermeiden.

Das Einsatzteil 32 baut auf einer ebenen Grundplatte 112 mit planparallelen Stirnseiten auf, von denen die in Fig. 5 rechte Stirnseite im montierten Zustand des Einsatzteils 32 flächig an der dem Druckraum 20 zugewandten Stirnseite des Ringabschnitts 62 der Laufhülse 56 anliegt. Auf der Grundplatte 112 sind drei Funktionsabschnitte des Einsatzteils 32 angeordnet, nämlich auf der vom Druckraum 20 abgewandten Seite der Grundplatte 112 ein Befestigungsabschnitt 114 zur Befestigung des Einsatzteils 32 im Druckanschluß 26, auf der dem Druckraum 20 zugewandten Seite der Grundplatte 112 ein Fesselabschnitt 116 zur lösbaren Fixierung der Kolbenbaugruppe 14 bezüglich des Zylindergehäuses 12 und, gleichfalls auf der dem Druckraum 20 zugewandten Seite der Grundplatte 112, der eingangs der Figurenbeschreibung bereits angesprochene Kanalabschnitt 36 zur Entlüftung des Druckraums 20.

Im dargestellten Ausführungsbeispiel ist das Einsatzteil 32 mittels einer Schnappverbindung im Druckanschluß 26 montiert. Hierfür ist der im wesentlichen hohlzylindrische Befestigungsabschnitt 114 an seinem von der Grundplatte 112 abgewandten, freien Ende außenumfangsseitig mit einem segmentierten Ringbund 118 versehen, dessen der Grundplatte 112 zugewandte Stirnseite eine im wesentlichen ringförmige, segmentierte Widerlagerfläche 120 ausbildet. Ausgehend von seinem freien Ende weist der Befestigungsabschnitt 114 des weiteren zur Bildung von Federarmen 122 eine Mehrzahl von, im dargestellten Ausführungsbeispiel vier sich in Längsrichtung des Befestigungsabschnitts 114 erstreckenden Schlitzen 124 auf, deren asymmetrische Verteilung über dem Umfang des Befestigungsabschnitts 114 (siehe Fig. 7) der Verteilung der Längsrippen 86 im vierten Bohrungsabschnitt 70 der gestuften Bohrung 54 im Grundkörper 38 des Zylindergehäuses 12 (vergl. Fig. 3) entspricht. Hierbei sind die Schlitze 124 im Befestigungsabschnitt 114 des Einsatzteils 32 einerseits und die Längsrippen 86 im Grundkörper 38 des Zylindergehäuses 12 andererseits maßlich derart aufeinander abgestimmt, daß im montierten Zustand des Einsatzteils 32 die Längsrippen 86 mit geringem Umfangsspiel in die Schlitze 124 eingreifen, dabei aber nicht nach radial innen über die Federarme 122 vorstehen. Die asymmetrische, aufeinander abgestimmte Umfangsverteilung der Längsrippen 86 / Schlitze 124 sorgt auf einfache Weise für eine eindeutige Drehwinkelorientierung des montierten Einsatzteils 32 im Nehmerzylinder 10, nämlich derart, daß der Kanalabschnitt 36 am Einsatzteil 32 in vertikaler Richtung nach oben ausgerichtet ist, wie in Fig. 1 gezeigt. Im montierten Zustand des Einsatzteils 32 ist dieses im Nehmerzylinder 10 auch in axialer Richtung formschlüssig festgelegt, wobei die Widerlagerfläche 120 am Ringbund 118 des Befestigungsabschnitts 114 gemäß Fig. 1 die über den vierten Bohrungsabschnitt 70 der gestuften Bohrung 54 im Grundkörper 38 nach radial innen überstehende, ringförmige Stirnfläche 84 des durchmesserkleineren Hülsenabschnitts 60 der Laufhülse 56 im Zylindergehäuse 12 schnapphakenartig hintergreift.

Zur vorzugsweise automatisierten Herstellung der vorbeschriebenen Schnappverbindung zwischen dem Zylindergehäuse 12 und dem bezüglich des Zylindergehäuses 12 winkelorientierten Einsatzteil 32 wird letzteres ausgehend vom offenen Ende des mit der Laufhülse 56 ausgekleideten Zylindergehäuses 12 in die Laufhülse 56 eingeschoben bis die Federarme 122 des Befestigungsabschnitts 114 an einer kleinen Schräge zwischen dem Ringabschnitt 62 und dem Innenumfang des durchmesserkleineren Hülsenabschnitts 60 der Laufhülse 56 zur Anlage gelangen. Bei der weiteren axialen Relativverschiebung des Einsatzteils 32 bezüglich des Zylindergehäuses 12 federn die Federarme 122 nach radial innen. In der Folge fädeln sich die Längsrippen 86 im vierten Bohrungsabschnitt 70 des Grundkörpers 38 des Zylindergehäuses 12 in den Schlitzen 124 des Befestigungsabschnitts 114 des Einsatzteils 32 ein, bevor die Federarme 122 wieder nach radial außen auffedern und mit ihrer segmentierten Widerlagerfläche 120 hinter der ringförmigen Stirnfläche 84 des Hülsenabschnitts 60 verrasten. Im wesentlichen gleichzeitig kommt die Grundplatte 112 des Einsatzteils 32 mit ihrer dem Druckanschluß 26 zugewandten Stirnseite an der dem Druckraum 20 zugewandten Stirnfläche des Ringabschnitts 62 der Laufhülse 56 zur Anlage. Da sowohl der Übergang von der dem Druckanschluß 26 zugewandten Stirnfläche der Federarme 122 zu deren Außenumfangsfläche als auch der Übergang der dem Druckraum 20 zugewandten Stirnfläche der Längsrippen 86 zu deren Innenumfangsfläche rechtwinklig, nur mit einer gebrochenen Kante, d.h. ohne Schräge ausgeführt ist, läßt sich das Einsatzteil 32 zum Zylindergehäuse 12 nur bei korrekter Winkelorientierung dieser Teile zueinander fügen. Bei dem Versuch, ein nicht oder inkorrekt winkelorientiertes Einsatzteil 32 zum Zylindergehäuse 12 zu fügen, stoßen die einander zugewandten Stirnflächen an den Federarmen 122 einerseits und den Längsrippen 86 andererseits im wesentlichen flächig aufeinander und verhindern somit eine weitere axiale Verschiebung des Einsatzteils 32 bezüglich des Zylindergehäuses 12. Da im übrigen die Winkelorientierung des Einsatzteils 32 bezüglich des Zylindergehäuses 12 an dessen Grundkörper 38 erfolgt, wird eine in Umfangsrichtung wirkende Fixierung der Laufhülse 56 im Grundkörper 38 nicht benötigt.

Wie des weiteren den Fig. 1, 7 und 8 zu entnehmen ist, begrenzt der Befestigungsabschnitt 114 innenumfangsseitig einen zylindrischen, mit der Mittelachse M des Nehmerzylinders 10 ausgefluchteten Kanalabschnitt 126, der die Grundplatte 112 des Einsatzteils 32 durchsetzt. Auf der dem Druckraum 20 zugewandten Seite der Grundplatte 112 schneiden sich die Kanalabschnitte 36 und 126, so daß ein im wesentlichen rechtwinkliger Durchgang zwischen dem Druckraum 20 und dem Druckanschluß 26 besteht. Wie die Fig. 1 zeigt, endet der vertikal verlaufende Kanalabschnitt 36 erst kurz vor der Umfangswand 24 des Zylindergehäuses 12 im Druckraum 20.

Nun sammeln sich etwaige Lufteinschlüsse bzw. -blasen in dem im Druckraum 20 befindlichen Druckmittel oben im Druckraum 20. Ebenso steigt erhitzte Hydraulikflüssigkeit im Druckraum 20 nach oben im Druckraum 20 auf. Bei einem Rücklauf des Kolbens 16 aus einer Betätigungsstellung in seine in Fig. 1 dargestellte Grundstellung kommt es zu einer gerichteten Zwangsströmung durch die Kanalabschnitte 36 und 126 über den Druckanschluß 26 und die nicht gezeigte Druckleitung zu dem ebenfalls nicht dargestellten Kupplungsgeberzylinder, der seinerseits mit einem nicht gezeigten Ausgleichsbehälter verbunden ist, wie eingangs bereits erwähnt. Infolge der Öffnung des Kanalabschnitts 36 zu einem im Druckraum 20 oben liegenden Bereich werden die dort angesammelten Lufteinschlüsse bzw. -blasen ebenso wie die dorthin aufgestiegene, erhitzte Hydraulikflüssigkeit von der Zwangsströmung mitgerissen und somit vom Nehmerzylinder 10 abgeführt. Demgemäß sorgt das Einsatzteil 32 mit seinem vertikal verlaufenden Kanalabschnitt 36 für eine kontinuierliche und sichere Selbstentlüftung des Nehmerzylinders 10 sowie eine Abfuhr erhitzter Hydraulikflüssigkeit, was zusätzliche Entlüfteranschlüsse od.dgl. entbehrlich macht.

Der Fesselabschnitt 116 des Einsatzteils 32 schließlich weist einen an der Grundplatte 112 ansetzenden, im montierten Zustand des Einsatzteils 32 gemäß Fig. 1 mit der Mittelachse M des Nehmerzylinders 10 axial ausgefluchteten Hohlzylinder 128 auf, der gemäß den Fig. 1 und 8 seitlich von dem Kanalabschnitt 36 durchbrochen wird. An seinem dem Kolben 16 zugewandten Ende ist der Hohlzylinder 128 innenumfangsseitig mit einem umlaufenden, nach radial innen vorspringenden Ringwulst 130 versehen, der in Fig. 9 vergrößert dargestellt ist und der temporären, formschlüssigen Fesselung des Kolbens 16 und damit der Kolbenbaugruppe 14 am Einsatzteil 32 dient. Hierfür wirkt der Ringwulst 130 mit dem druckraumseitigen Fortsatz 34 des Kolbens 16, genauer mit einem am vom Kolben 16 abgewandten Ende des Fortsatzes 34 außenumfangsseitig angeformten Ringbund 132 (Fig. 1) zusammen, der eine sich zum Druckanschluß 26 hin geringfügig verjüngende Außenfläche aufweist. Der gemäß Fig. 9 zum Druckraum 20 hin abgerundete Ringwulst 130 am Fesselabschnitt 116 des Einsatzteils 32 einerseits und der Ringbund 132 am Fortsatz 34 des Kolbens 16 andererseits sind maßlich derart aufeinander abgestimmt, daß der lichte Innendurchmesser des Ringwulstes 130 geringfügig kleiner ist als der größte Außendurchmesser des Ringbunds 132, während dessen Abstand zur Stirnfläche des Kolbens 16 geringfügig größer ist als die axiale Länge des Ringwulstes 130.

Zur Fesselung der Kolbenbaugruppe 14 am Einsatzteil 32 beim Zusammenbau des Nehmerzylinders 10 wird die Kolbenbaugruppe 14 gegen die Kraft der Schraubendruckfeder 28 soweit im Sinne einer Verkleinerung des Druckraums 20 in das Zylindergehäuse 12 hinein geschoben bis der Fortsatz 34 am Kolben 16 mit seinem zum Einsatzteil 32 hin abgeschrägten Ringbund 132 an dem dem Druckraum 20 zugewandten, abgerundeten Ringwulst 130 zur Anlage gelangt. Bei einer weiteren axialen Relativverschiebung der Kolbenbaugruppe 14 bezüglich des Zylindergehäuses 12 in Richtung des Druckanschlusses 26 weitet der Ringbund 132 am Kolbenfortsatz 34 den Ringwulst 130 des Fesselabschnitts 116 elastisch nach radial außen auf. Nach Überdrücken des Ringwulstes 130 schnappt dieser infolge der elastischen Eigenschaften des Materials des Einsatzteils 32 hinter dem Ringbund 132, also in dem Ringspalt zwischen dem Ringbund 132 und der dem Druckraum 20 zugewandten Stirnfläche des Kolbens 16 ein. Die Kolbenbaugruppe 14 ist nun formschlüssig am Fesselabschnitt 116 des Einsatzteils 32 fixiert.

Da somit die Kolbenbaugruppe 14 in einer Stellung gefesselt ist, in der sie so weit wie möglich in das Zylindergehäuse 12 hineingeschoben ist, benötigt der Nehmerzylinder 10 bei der Lagerung, dem Transport und der Montage im Kraftfahrzeug nur einen geringen Raum. Darüber hinaus kann der Nehmerzylinder 10 im wesentlichen kraftfrei im Kraftfahrzeug montiert werden, weil die Schraubendruckfeder 28 nicht zusammengedrückt werden muß, vielmehr vermittels der durch das Einsatzteil 32 bewirkten Fesselung der Kolbenbaugruppe 14 in einer vorgespannten Stellung gehalten ist. Dies ermöglicht auch eine Montage des Nehmerzylinders 10 im Kraftfahrzeug als Bestandteil einer hydraulischen Kupplungsbetätigung, die als aus Geberzylinder, Ausgleichsbehälter, Druckleitung und Nehmerzylinder 10 vormontierte und mit Hydraulikflüssigkeit (teil)vorbefüllte Einheit an das Montageband des Kraftfahrzeugherstellers geliefert wird, wobei das Füllvolumen des Nehmerzylinders 10 in der gefesselten Stellung der Kolbenbaugruppe 14 schon fast dem Ruhevolumen des betriebsbereiten Nehmerzylinders 10 in der in Fig. 1 gezeigten Grundstellung der Kolbenbaugruppe 14 entspricht.

Für die erste Betätigung des im Kraftfahrzeug montierten Nehmerzylinders 10 wird das Druckmittel über den Druckanschluß 26 dem Druckraum 20 zugeführt. Infolge des sich hierbei im Druckraum 20 aufbauenden Drucks, der an der Wirkfläche des Kolbens 16 angreift, erfährt der Kolben 16 eine in Fig. 1 nach links gerichtete Kraft, die sich der Kraft der Schraubendruckfeder 28 aufaddiert. Übersteigt die Summe dieser Kräfte die Haltekraft der Verbindung zwischen dem Fortsatz 34 des Kolbens 16 und dem Fesselabschnitt 116 des Einsatzteils 32 wird der Ringwulst 130 am Fesselabschnitt 116 über den Ringbund 132 am Fortsatz 34 wieder aufgedehnt, worauf die Kolbenbaugruppe 14 vom Einsatzteil 32 freikommt. Eine weitere Fesselung der Kolbenbaugruppe 14 im Betrieb des Nehmerzylinders 10 ist nicht vorgesehen und kann auch nicht erfolgen, da der in Fig. 1 gezeigte Abstand zwischen dem Fortsatz 34 am Kolben 16 und dem Fesselabschnitt 116 am Einsatzteil 32 im Betrieb des Nehmerzylinders 10 nicht mehr unterschritten wird.

Aus der obigen Beschreibung ist ersichtlich, daß die Haltekraft der Verbindung zwischen dem Fortsatz 34 des Kolbens 16 und dem Fesselabschnitt 116 des Einsatzteils 32 konstruktiv derart ausgelegt ist, daß sie einerseits hinreichend größer ist als die Federkraft der Schraubendruckfeder 28, um ein ungewolltes Lösen der Fesselung der Kolbenbaugruppe 14 zu verhindern, andererseits aber ausreichend kleiner als die Haltekraft der Verbindung zwischen dem Einsatzteil 32 und dem Zylindergehäuse 12, so daß das Einsatzteil 32 bei der Erstbetätigung des Nehmerzylinders 10 nicht aus dem Druckanschluß 26 hinausgezogen wird.

Wenngleich der Fesselabschnitt 116 bei dem oben beschriebenen Ausführungsbeispiel innenumfangsseitig mit einer in Umfangsrichtung geschlossenen Kontur in Form des Ringwulstes 130 versehen ist, der mit dem Ringbund 132 am Fortsatz 34 des Kolbens 16 wie beschrieben zusammenwirkt, um die Kolbenbaugruppe 14 in der Art einer Schnappverbindung temporär am Einsatzteil 32 zu fesseln, kann diese Formschlußverbindung auch anders ausgestaltet sein, etwa mit Federarmen und daran befindlichen Schnapphaken als Fesselabschnitt des Einsatzteils, analog der oben erläuterten Festlegung des Einsatzteils im Druckanschluß.

Es wird ein Hydraulikzylinder offenbart, der einen Druckraum aufweist, welcher auf der einen Seite von einem in einem Zylindergehäuse längsverschieblich aufgenommenen Kolben, auf der anderen Seite von einem Gehäuseboden des Zylindergehäuses und nach radial außen von einer Umfangswand des Zylindergehäuses begrenzt ist, wobei der Druckraum wahlweise über einen am Gehäuseboden vorgesehenen Druckanschluß mit einem Druckmittel beaufschlagbar ist, um den Kolben im Zylindergehäuse zu verschieben. Erfindungsgemäß ist in dem Druckanschluß ein Einsatzteil eingesetzt, das einen mit dem Druckanschluß kommunizierenden Kanalabschnitt aufweist, der sich in der Einbaulage des Hydraulikzylinders im wesentlichen in vertikaler Richtung erstreckt und in der Nähe der Umfangswand des Zylindergehäuses im Druckraum mündet. Im Ergebnis wird ein einfach ausgebildeter und kompakt bauender Hydraulikzylinder geschaffen, der auf verglichen zum Stand der Technik einfachere Weise entlüftet werden kann.

### BEZUGSZEICHENLISTE

- 10: Nehmerzylinder
- 12: Zylindergehäuse
- 14: Kolbenbaugruppe
- 16: Kolben
- 18: Kolbenstange
- 20: Druckraum
- 22: Gehäuseboden
- 24: Umfangswand
- 26: Druckanschluß
- 28: Schraubendruckfeder
- 30: Kupplungshebel
- 32: Einsatzteil
- 34: Fortsatz
- 36: Kanalabschnitt
- 38: Grundkörper
- 40: Befestigungsflansch
- 42: Befestigungsbohrung
- 44: Stahlbuchse
- 46: Radialnut
- 48: Faltenbalgabschnitt
- 50: Schutzkappe
- 52: Ringbund
- 54: gestufte Bohrung
- 56: Laufhülse
- 58: Hülsenabschnitt
- 60: Hülsenabschnitt
- 62: Ringabschnitt
- 64: erster Bohrungsabschnitt
- 66: zweiter Bohrungsabschnitt
- 68: dritter Bohrungsabschnitt
- 70: vierter Bohrungsabschnitt
- 72: Hinterschnitt
- 74: Sicherungselement
- 76: Ringschulter
- 78: Radialnut
- 80: O-Ring
- 82: Ringschulter
- 84: ringförmige Stirnfläche
- 86: Längsrippe
- 88: Druckanschlußbohrung
- 90: Radialnut
- 92: Nutring
- 94: Aussparung
- 96: Kugelkopf
- 98: Sicherungselement
- 100: Ende
- 102: Endfläche
- 104: Ringbund
- 106: Ringaussparung
- 108: Befestigungsabschnitt
- 110: Axialnut
- 112: Grundplatte
- 114: Befestigungsabschnitt
- 116: Fesselabschnitt
- 118: Ringbund
- 120: Widerlagerfläche
- 122: Federarm
- 124: Schlitz
- 126: Kanalabschnitt
- 128: Hohlzylinder
- 130: Ringwulst
- 132: Ringbund

- M: Mittelachse

## Patentansprüche

1. Hydraulikzylinder (10), insbesondere Nehmerzylinder für eine hydraulische Kupplungsbetätigung für Kraftfahrzeuge, mit einem Druckraum (20), der auf der einen Seite von einem in einem Zylindergehäuse (12) längsverschieblich aufgenommenen Kolben (16), auf der anderen Seite von einem Gehäuseboden (22) des Zylindergehäuses (12) und nach radial außen von einer Umfangswand (24) des Zylindergehäuses (12) begrenzt ist, wobei der Druckraum (20) wahlweise über einen im Gehäuseboden (22) vorgesehenen Druckanschluß (26) mit einem Druckmittel beaufschlagbar ist, um den Kolben (16) im Zylindergehäuse (12) zu verschieben, **dadurch gekennzeichnet, daß** im Druckraum (20) am Gehäuseboden (22) ein Einsatzteil (32) vorgesehen ist, das in dem Druckanschluß (26) eingesetzt ist und einen mit dem Druckanschluß (26) kommunizierenden Kanalabschnitt (36) aufweist, der sich in der Einbaulage des Hydraulikzylinders (10) im wesentlichen in vertikaler Richtung erstreckt und in der Nähe der Umfangswand (24) des Zylindergehäuses (12) im Druckraum (20) mündet.

2. Hydraulikzylinder (10) nach Anspruch 1, **dadurch gekennzeichnet, daß** das Zylindergehäuse (12) einen Grundkörper (38) aus Kunststoff hat, welcher mit einer Bohrung (54) versehen ist, in der eine metallische Laufhülse (56) für den Kolben (16) eingesetzt ist.

3. Hydraulikzylinder (10) nach Anspruch 2, **dadurch gekennzeichnet, daß** die Laufhülse (56) zwei Hülsenabschnitte (58, 60) unterschiedlichen Durchmessers aufweist, die am Gehäuseboden (22) des Zylindergehäuses (12) über einen Ringabschnitt (62) miteinander verbunden sind, der zusammen mit einer Umfangswand (24) des durchmessergrößeren Hülsenabschnitts (58) den Druckraum (20) begrenzt, wobei die Laufhülse (56) gegenüber dem Grundkörper (38) des Zylindergehäuses (12) gegen den Druck im Druckraum (20) mittels einer statischen Dichtung (80) abgedichtet ist, die zwischen dem durchmesserkleineren Hülsenabschnitt (60) der Laufhülse (56) und einem diesem zugeordneten Bohrungsabschnitt (68) der gestuften Bohrung (54) im Grundkörper (38) sitzt.

4. Hydraulikzylinder (10) nach einem der vorhergehenden Ansprüche, **gekennzeichnet durch** ein Federelement (28), welches den Kolben (16) in einer vom Gehäuseboden (22) weggewandten Richtung vorspannt und auf der vom Druckraum (20) abgewandten Seite des Kolbens (16) angeordnet ist.

5. Hydraulikzylinder nach Anspruch 2 oder 3 und Anspruch 4, **dadurch gekennzeichnet, daß** die Laufhülse (56) im Grundkörper (38) des Zylindergehäuses (12) mittels eines ringförmigen, von einer mit dem Kolben (16) wenigstens zug- und druckfest verbundenen Kolbenstange (18) durchgriffenen Sicherungselements (74) gesichert ist, das auf seiner vom Druckraum (20) abgewandten Seite ein Widerlager (110) für ein Ende des Federelements (28) ausbildet, dessen anderes Ende sich an einem Ringbund (104) an der Kolbenstange (18) abstützt.

6. Hydraulikzylinder (10) nach einem der vorhergehenden Ansprüche, **dadurch gekennzeichnet, daß** das Einsatzteil (32) axial formschlüssig im Druckanschluß (26) verankert ist.

7. Hydraulikzylinder (10) nach Anspruch 6, **dadurch gekennzeichnet, daß** das Einsatzteil (32) mittels einer Schnappverbindung im Druckanschluß (26) verankert ist.

8. Hydraulikzylinder (10) nach Anspruch 7, **dadurch gekennzeichnet, daß** das Einsatzteil (32) auf seiner vom Druckraum (20) abgewandten Seite einen außenumfangsseitig mit einem Ringbund (118) versehenen, hohlzylindrischen Befestigungsabschnitt (114) aufweist, welcher ausgehend von seinem freien Ende zur Bildung einer Mehrzahl von Federarmen (122) mehrfach längsgeschlitzt ist, wobei der Ringbund (118) am Befestigungsabschnitt (114) im montierten Zustand des Einsatzteils (32) eine vom Druckraum (20) abgewandte, ringförmige Stirnfläche (84) im Druckanschluß (26) hintergreift.

9. Hydraulikzylinder (10) nach wenigstens den Ansprüchen 2 und 8, **dadurch gekennzeichnet, daß** die vom Einsatzteil (32) hintergriffene, ringförmige Stirnfläche (84) im Druckanschluß (26) durch die Laufhülse (56) des Zylindergehäuses (12) ausgebildet ist.

10. Hydraulikzylinder (10) nach einem der vorhergehenden Ansprüche, **dadurch gekennzeichnet, daß** der Kanalabschnitt (36) des Einsatzteils (32) mit einem hohlzylindrischen Befestigungsabschnitt (114) hydraulisch verbunden ist, der in dem Druckanschluß (26) am Gehäuseboden (22) des Zylindergehäuses (12) eingesteckt ist.

11. Hydraulikzylinder (10) nach Anspruch 10, **dadurch gekennzeichnet, daß** das Einsatzteil (32) bezüglich des Zylindergehäuses (12) drehwinkelorientiert und in Umfangsrichtung formschlüssig im Druckanschluß (26) verankert ist.

12. Hydraulikzylinder (10) nach Anspruch 11, **dadurch gekennzeichnet, daß** der hohlzylindrische Befestigungsabschnitt (114) des Einsatzteils (32) mit wenigstes zwei Längsschlitzen (124) versehen ist, die asymmetrisch über dem Umfang des Befestigungsabschnitts (114) verteilt sind, während der Druckanschluß (26) innenumfangsseitig mit mindestens zwei Längsrippen (86) versehen ist, deren Verteilung über dem Umfang des Druckanschlusses (26) der Verteilung der Längsschlitze (124) im Einsatzteil (32) entspricht, wobei im montierten Zustand des Einsatzteils (32) die Längsrippen (86) am Druckanschluß (26) in den Längsschlitzen (124) im Einsatzteil (32) drehwinkelorientierend eingreifen.

13. Hydraulikzylinder (10) nach einem der vorhergehenden Ansprüche, **gekennzeichnet durch** ein Fixierelement, das den Kolben (16) vor einer ersten Betätigung des Hydraulikzylinders (10) in einer vorbestimmten Hubstellung bezüglich des Zylindergehäuses (12) fixiert und dazu ausgebildet ist, mit der ersten Betätigung des Hydraulikzylinders (10) den Kolben (16) gegenüber dem Zylindergehäuse (12) freizugeben, wobei das Einsatzteil (32) ebenfalls das Fixierelement ausbildet und zur lösbaren Fixierung des Kolbens (16) bezüglich des Zylindergehäuses (12) mit einem Gegenelement (34) am Kolben (16) zusammenwirkt.

14. Hydraulikzylinder (10) nach Anspruch 13, **dadurch gekennzeichnet, daß** das Einsatzteil (32) einen Fesselabschnitt (116) hat, an dem ein druckraumseitiger, das Gegenelement am Kolben (16) ausbildender Fortsatz (34) formschlüssig fixierbar ist.

15. Hydraulikzylinder (10) nach Anspruch 14, **dadurch gekennzeichnet, daß** der Fesselabschnitt (116) des Einsatzteils (32) einen bezüglich einer Mittelachse (M) des Druckraums (20) axial ausgefluchteten Hohlzylinder (128) mit einem innenumfangsseitigen Ringwulst (130) aufweist, während der zentrische Fortsatz (34) am Kolben (16) außenumfangsseitig mit einem Ringbund (132) versehen ist; der im am Einsatzteil (32) fixierten Zustand des Kolbens (16) den Ringwulst (130) hintergreift.

16. Hydraulikzylinder (10) nach einem der vorhergehenden Ansprüche, **dadurch gekennzeichnet, daß** das Einsatzteil (32) aus einem Kunststoff spritzgegossen ist.

## Claims

1. Hydraulic cylinder (10), in particular slave cylinder for a hydraulic clutch actuation system for motor vehicles, with a pressure chamber (20) which is delimited on one side by a piston (16) accommodated in a longitudinally displaceable manner in a cylinder housing (12), on the other side by a housing bottom (22) of the cylinder housing (12), and radially outwards by a circumferential wall (24) of the cylinder housing (12), wherein the pressure chamber (20) can selectively be acted upon by a pressure medium via a pressure connection (26) provided in the housing bottom (22) in order to displace the piston (16) in the cylinder housing (12), **characterized in that** an insertion part (32) is provided in the pressure chamber (20) at the housing bottom (22), the insertion part being inserted in the pressure connection (26) and comprising a channel section (36) which communicates with the pressure connection (26) and, in the installed position of the hydraulic cylinder (10), extends essentially in the vertical direction and opens into the pressure chamber (20) in the vicinity of the circumferential wall (24) of the cylinder housing (12).

2. Hydraulic cylinder (10) according to Claim 1, **characterized in that** the cylinder housing (12) has a basic body (38) made of plastic, which basic body is provided with a bore (54) in which a metallic sleeve (56) for the piston (16) is inserted.

3. Hydraulic cylinder (10) according to Claim 2, **characterized in that** the sleeve (56) comprises two sleeve sections (58, 60) of different diameter which are joined to one another at the housing bottom (22) of the cylinder housing (12) via an annular section (62) which together with a circumferential wall (24) of the larger-diameter sleeve section (58) delimits the pressure chamber (20), wherein the sleeve (56) is sealed relative to the basic body (38) of the cylinder housing (12) against the pressure in the pressure chamber (20) by means of a static seal (80) which is seated between the smaller-diameter sleeve section (60) of the sleeve (56) and a bore section (68) of the stepped bore (54) in the basic body (38) which is assigned thereto.

4. Hydraulic cylinder (10) according to any of the preceding claims, **characterized by** a spring element (28) which prestresses the piston (16) in a direction away from the housing bottom (22) and is arranged on the side of the piston (16) facing away from the pressure chamber (20).

5. Hydraulic cylinder according to Claim 2 or 3 and Claim 4, **characterized in that** the sleeve (56) is secured in the basic body (38) of the cylinder housing (12) by means of an annular securing element (74) which is passed through by a piston rod (18) that is connected to the piston (16) at least in manner resistant to tension and pressure, said securing element forming, on its side facing away from the pressure chamber (20), an abutment (110) for one end of the spring element (28), the other end of said spring element being supported against an annular collar (104) on the piston rod (18).

6. Hydraulic cylinder (10) according to any of the preceding claims, **characterized in that** the insertion part (32) is anchored axially in the pressure connection (26) in a form-fitting manner.

7. Hydraulic cylinder (10) according to Claim 6, **characterized in that** the insertion part (32) is anchored in the pressure connection (26) by means of a snap connection.

8. Hydraulic cylinder (10) according to Claim 7, **characterized in that** the insertion part (32) has, on its side facing away from the pressure chamber (20), a hollow-cylindrical fixing section (114) which is provided with an annular collar (118) on its outer circumference and, starting from its free end, has multiple longitudinal slots so as to form a plurality of resilient arms (122), wherein the annular collar (118) on the fixing section (114), in the mounted state of the insertion part (32), engages behind an annular end face (84) in the pressure connection (26), said annular end face facing away from the pressure chamber (20).

9. Hydraulic cylinder (10) according to at least Claims 2 and 8, **characterized in that** the annular end face (84) in the pressure connection (26) which is engaged behind by the insertion part (32) is formed by the sleeve (56) of the cylinder housing (12).

10. Hydraulic cylinder (10) according to any of the preceding claims, **characterized in that** the channel section (36) of the insertion part (32) is hydraulically connected to a hollow-cylindrical fixing section (114) which is plugged into the pressure connection (26) at the housing bottom (22) of the cylinder housing (12).

11. Hydraulic cylinder (10) according to Claim 10, **characterized in that** the insertion part (32) is anchored in the pressure connection (26) at an oriented angle of rotation relative to the cylinder housing (12) and in a form-fitting manner in the circumferential direction.

12. Hydraulic cylinder (10) according to Claim 11, **characterized in that** the hollow-cylindrical fixing section (114) of the insertion part (32) is provided with at least two longitudinal slots (124) which are distributed asymmetrically over the circumference of the fixing section (114), whereas the pressure connection (26) is provided with at least two longitudinal ribs (86) on its inner circumference, the distribution of said longitudinal ribs over the circumference of the pressure connection (26) corresponding to the distribution of the longitudinal slots (124) in the insertion part (32), wherein, in the mounted state of the insertion part (32), the longitudinal ribs (86) on the pressure connection (26) engage in the longitudinal slots (124) in the insertion part (32) in such a way as to orient the angle of rotation.

13. Hydraulic cylinder (10) according to any of the preceding claims, **characterized by** a fixing element which fixes the piston (16) in a predefined stroke position relative to the cylinder housing (12) prior to first actuation of the hydraulic cylinder (10) and is designed to release the piston (16) relative to the cylinder housing (12) upon first actuation of the hydraulic cylinder (10), wherein the insertion part (32) likewise forms the fixing element and cooperates with a mating element (34) on the piston (16) to releasably fix the piston (16) relative to the cylinder housing (12).

14. Hydraulic cylinder (10) according to Claim 13, **characterized in that** the insertion part (32) has a holding section (116) to which an extension (34) on the pressure chamber side can be fixed in a form-fitting manner, said extension (34) forming the mating element on the piston (16).

15. Hydraulic cylinder (10) according to Claim 14, **characterized in that** the holding section (116) of the insertion part (32) comprises a hollow cylinder (128) which is aligned axially relative to a central axis (M) of the pressure chamber (20) and has an annular bead (130) on its inner circumference, whereas the centric extension (34) on the piston (16) is provided with an annular collar (132) on its outer circumference, which annular collar engages behind the annular bead (130) in the condition where the piston (16) is fixed to the insertion part (32).

16. Hydraulic cylinder (10) according to any of the preceding claims, **characterized in that** the insertion part (32) is injection-molded from a plastic.

## Revendications

1. Cylindre ou vérin hydraulique (10), notamment cylindre ou vérin récepteur pour un actionnement hydraulique d'embrayage de véhicules automobiles, comprenant une chambre de pression (20) qui est délimitée sur un côté par un piston (16) logé en coulissement longitudinal dans un carter de cylindre (12), sur l'autre côté par un fond de carter (22) du carter de cylindre (12), et radialement vers l'extérieur par une paroi périphérique (24) du carter de cylindre (12), la chambre de pression (20) pouvant être alimentée sélectivement par un fluide de pression au moyen d'un raccord de pression (26) prévu dans le fond de carter (22), en vue de faire coulisser le piston (16) dans le carter de cylindre (12),
**caractérisé en ce que** dans la chambre de pression (20), sur le fond de carter (22), est prévue une pièce d'insert (32) placée dans le raccord de pression (26) et présentant un tronçon de canal (36) qui communique avec le raccord de pression (26), et qui, dans la position implantée du cylindre hydraulique (10), s'étend sensiblement dans la direction verticale et débouche dans la chambre de pression (20) à proximité de la paroi périphérique (24) du carter de cylindre (12).

2. Cylindre hydraulique (10) selon la revendication 1, **caractérisé en ce que** le carter de cylindre (12) comprend un corps de base (38) en matière plastique, qui est pourvu d'un alésage (54) dans lequel est inséré un fourreau de portée (56) métallique, pour le piston (16).

3. Cylindre hydraulique (10) selon la revendication 2, **caractérisé en ce que** le fourreau de portée (56) présente deux tronçons de fourreau (58, 60) de diamètre différent, qui, au niveau du fond de carter (12), sont reliés l'un à l'autre par l'intermédiaire d'un tronçon annulaire (62) délimitant en commun avec une paroi périphérique (24) du tronçon de fourreau (58) de diamètre plus grand, la chambre de pression (20), le fourreau de portée (56) étant rendu étanche par rapport au corps de base (38) du carter de cylindre (12) à l'encontre de la pression dans la chambre de pression (20), au moyen d'un joint d'étanchéité (80) statique, qui est placé entre le tronçon de fourreau (60) de diamètre plus petit du fourreau de portée (56) et un tronçon d'alésage (68), qui lui est associé, de l'alésage étagé (54) dans le corps de base (38).

4. Cylindre hydraulique (10) selon l'une des revendications précédentes, **caractérisé par** un élément de ressort (28) qui assure une précontrainte du piston (16) dans une direction s'éloignant du fond de carter (22), et qui est agencé sur le côté du piston (16) opposé à celui dirigé vers la chambre de pression (20).

5. Cylindre hydraulique (10) selon la revendication 2 ou 3 et la revendication 4, **caractérisé en ce que** le fourreau de portée (56) est arrêté dans le corps de base (38) du carter de cylindre (12) au moyen d'un élément d'arrêt (74) de forme annulaire, qui est traversé par une tige de piston (18) reliée au moins de manière fixe en traction et en compression avec le piston (16), et forme, sur son côté éloigné de la chambre de pression (20), une butée d'appui (110) pour une extrémité de l'élément de ressort (28) dont l'autre extrémité s'appuie sur une embase annulaire (104) de la tige de piston (18).

6. Cylindre hydraulique (10) selon l'une des revendications précédentes, **caractérisé en ce que** la pièce d'insert (32) est ancrée axialement par complémentarité de formes dans le raccord de pression (26).

7. Cylindre hydraulique (10) selon la revendication 6, **caractérisé en ce que** la pièce d'insert (32) est ancrée dans le raccord de pression (26) au moyen d'une liaison par encliquetage.

8. Cylindre hydraulique (10) selon la revendication 7, **caractérisé en ce que** la pièce d'insert (32) présente, sur son côté éloigné de la chambre de pression (20), un tronçon de fixation (114) cylindrique creux, qui est pourvu du côté périphérique extérieur, d'une embase annulaire (118), et est fendu longitudinalement de manière multiple, à partir de son extrémité libre, en vue de former une pluralité de bras élastiques (122), l'embase annulaire (118) sur le tronçon de fixation (114) s'engageant en contre-dépouille, lorsque la pièce d'insert (32) est montée, derrière une surface frontale (84) de forme annulaire dans le raccord de pression (26) et dirigée à l'opposé de la chambre de pression (20).

9. Cylindre hydraulique (10) selon au moins les revendications 2 et 8, **caractérisé en ce que** la surface frontale (84) de forme annulaire dans le raccord de pression (26), derrière laquelle s'engage en contre-dépouille la pièce d'insert (32), est formée par le fourreau de portée (56) du carter de cylindre (12).

10. Cylindre hydraulique (10) selon l'une des revendications précédentes, **caractérisé en ce que** le tronçon de canal (36) de la pièce d'insert (32) est relié hydrauliquement à un tronçon de fixation (114) cylindrique creux qui est emmanché dans le raccord de pression (26) dans le fond de carter (22) du carter de cylindre (12).

11. Cylindre hydraulique (10) selon la revendication 10, **caractérisé en ce que** la pièce d'insert (32) est orientée angulairement en rotation par rapport au carter de cylindre (12) et est ancrée par complémentarité de formes en direction périphérique dans le raccord de pression (26).

12. Cylindre hydraulique (10) selon la revendication 11, **caractérisé en ce que** le tronçon de fixation (114) cylindrique creux de la pièce d'insert (32) est pourvu d'au moins deux fentes longitudinales (124), qui sont réparties de manière asymétrique le long de la périphérie du tronçon de fixation (114), tandis que le raccord de pression (26) est pourvu du côté de sa périphérie intérieure, d'au moins deux nervures longitudinales (86), dont la répartition le long de la périphérie correspond à la répartition des fentes longitudinales (124) dans la pièce d'insert (32), les nervures longitudinales (86) dans le raccord de pression (26) s'engageant, à l'état monté de la pièce d'insert (32), dans les fentes longitudinales (124) de la pièce d'insert (32) en assurant l'orientation angulaire en rotation.

13. Cylindre hydraulique (10) selon l'unes des revendications précédentes, **caractérisé par** un élément de fixation qui, avant un premier actionnement du cylindre hydraulique (10), fixe le piston (16) dans une position de course de déplacement prédéterminée par rapport au carter de cylindre (12), et est conçu de façon à libérer, avec le premier actionnement du cylindre hydraulique (10), le piston (16) par rapport au carter de cylindre (12), la pièce d'insert (32) formant également l'élément de fixation et coopérant avec un élément conjugué (34) sur le piston (16), pour assurer la fixation amovible du piston (16) par rapport au carter de cylindre (12).

14. Cylindre hydraulique (10) selon la revendication 13, **caractérisé en ce que** la pièce d'insert (32) comporte un tronçon de capture (116) dans lequel peut être fixé par complémentarité de formes, un prolongement (34) côté chambre de pression, formant l'élément conjugué sur le piston (16).

15. Cylindre hydraulique (10) selon la revendication 14, **caractérisé en ce que** le tronçon de capture (116) de la pièce d'insert (32) comporte un cylindre creux (128) aligné axialement avec un axe central (M) de la chambre de pression (20) et comportant un bourrelet annulaire (130) en périphérie intérieure, tandis que le prolongement (34) central sur le piston (16) est pourvu en périphérie extérieure, d'une embase annulaire (132) qui, pour l'état de fixation du piston (16) à la pièce d'insert (32), vient s'engager en contre-dépouille derrière le bourrelet annulaire (130).

16. Cylindre hydraulique (10) selon l'une des revendications précédentes, **caractérisé en ce que** la pièce d'insert (32) est moulée par injection en une matière plastique.
